# EUROPEAN PATENT APPLICATION

(11) **EP 4 629 347 A1**
(43) Date of publication of application: **08.10.2025**
(21) Application number: 25160069.8
(22) Date of filing: 25.02.2025
(51) Int. Cl.: H01M 4/62, H01M 4/131, B82Y 30/00, C01B 32/15, C01B 32/158, H01M 4/505, H01M 4/525, H01M 4/36, H01M 10/0525

(54) **LOW-RESISTANCE POSITIVE ELECTRODE AND RECHARGEABLE LITHIUM BATTERY INCLUDING THE SAME**

(30) Priority: 05.04.2024 KR 20240046757
(71) Applicant: SAMSUNG SDI CO., LTD., Yongin-si, Gyeonggi-do 17084 (KR)
(72) Inventor: Lee, Minju, Yongin-si, Gyeonggi-do 17084 (KR); Oh, Songyul, Yongin-si, Gyeonggi-do 17084 (KR); Lee, Junsik, Yongin-si, Gyeonggi-do 17084 (KR); Lee, Seongsun, Yongin-si, Gyeonggi-do 17084 (KR); Lee, Boram, Yongin-si, Gyeonggi-do 17084 (KR); Choi, Kyuhwan, Yongin-si, Gyeonggi-do 17084 (KR); Park, Sejeong, Yongin-si, Gyeonggi-do 17084 (KR); Kang, Younghye, Yongin-si, Gyeonggi-do 17084 (KR); Ko, Donghyun, Yongin-si, Gyeonggi-do 17084 (KR)
(74) Representative: Michalski Hüttermann & Partner Patentanwälte mbB

(57) **Abstract**

Example embodiments include low-resistance positive electrodes, and rechargeable lithium batteries including the same. The positive electrode includes a positive electrode current collector, and a positive electrode active material layer on the positive electrode current collector. The positive electrode active material layer includes a positive electrode active material in a concentration of about 95.5 wt% to about 99 wt%, a binder in a concentration of about 0.5 wt% to about 1.5 wt%, and a conductive material in a concentration of about 0.5 wt% to about 3 wt%. The conductive material includes nano-carbon particles and carbon nano-tubes. A weight ratio of the carbon nano-tubes to the nano-carbon particles is in a range of about 1.5 to about 3.5.

## Description

### CROSS-REFERENCE TO RELATED APPLICATION

This application claims priority under 35 U.S.C § 119 to Korean Patent Application No. 10-2024-0046757 filed on April 5, 2024 in the Korean Intellectual Property Office.

### BACKGROUND

The present disclosure relates to a low-resistance positive electrode and a rechargeable lithium battery including the low-resistance positive electrode.

Recently, with the rapid spread of battery-using electronic devices, such as, e.g., mobile phones, laptop computers, electric vehicles, and the like, there is increasing demand for rechargeable batteries with high energy density and high capacity.

A rechargeable lithium battery includes a positive electrode, a negative electrode, and an electrolyte, the positive and negative electrodes include an active material in which intercalation and deintercalation are possible, and the battery generates electrical energy caused by oxidation and reduction reactions when lithium ions are intercalated and deintercalated.

### SUMMARY

Example embodiments include a positive electrode including an active material layer having a resistivity of about 5 Ωcm or less and ionic resistance of about 6 Ωcm² or less.

Example embodiments include a high-power rechargeable lithium battery including the positive electrode.

According to example embodiments, a positive electrode may include a positive electrode current collector; and a positive electrode active material layer on the positive electrode current collector. The positive electrode active material layer may include a positive electrode active material of about 95.5 wt% to about 99 wt% of the total weight of the positive electrode active material layer, a binder in a concentration of about 0.5 wt% to about 1.5 wt%, and a conductive material in a concentration of about 0.5 wt% to about 3 wt%. The conductive material may include nano-carbon and carbon nano-tube. A weight ratio of the carbon nano-tubes to the nano-carbon particles may be in a range of about 1.5 to about 3.5.

According to example embodiments, a positive electrode may include a positive electrode current collector, and a positive electrode active material layer on the positive electrode current collector. The positive electrode active material layer may include a positive electrode active material, a binder, and a conductive material. The conductive material may include nano-carbon particles and carbon nano-tubes in a weight ratio of 1:1.5 to 1:3.5. A resistivity of the positive electrode active material layer may be equal to or less than about 5 Ωcm. An ionic resistance of the positive electrode active material layer may be equal to or less than about 6 Ωcm².

According to example embodiments, a rechargeable lithium battery may include a positive electrode that includes a positive electrode current collector and a positive electrode active material layer on the positive electrode current collector, a negative electrode, and a separator between the positive electrode and the negative electrode. The positive electrode active material layer may include a positive electrode active material in a concentration of about 95.5 wt% to about 99 wt% of the total weight of the positive electrode active material layer, a binder in a concentration of about 0.5 wt% to about 1.5 wt%, and a conductive material in a concentration of about 0.5 wt% to about 3 wt%. The conductive material may include nano-carbon and carbon nano-tubes. A weight ratio of the carbon nano-tubes to the nano-carbon particles may be in a range of about 1.5 to about 3.5.

### BRIEF DESCRIPTION OF DRAWINGS

FIG. 1 illustrates a simplified conceptual diagram showing a rechargeable lithium battery according to an example embodiment of the present disclosure.
FIGS. 2 to 5 illustrate simplified diagrams showing a rechargeable lithium battery according to an example embodiment of the present disclosure.

### DETAILED DESCRIPTION OF EXAMPLE EMBODIMENTS

In order to sufficiently understand the configuration and effect of example embodiments of the present disclosure, example embodiments of the present disclosure will be described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is about 50 vol% in a particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and subsequently, an average particle diameter (D₅₀) value may be obtained through a calculation. Dissimilarly, a laser scattering method may be utilized to measure the average particle diameter (D₅₀). In the laser scattering method, a target particle is distributed in a distribution solvent, introduced into a laser scattering particle measurement device (e.g., MT3000 commercially available from Microtrac, Inc), irradiated with ultrasonic waves of 28 kHz at a power of 60 W, and an average particle diameter (D₅₀) is subsequently calculated in the 50% standard of particle diameter distribution in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

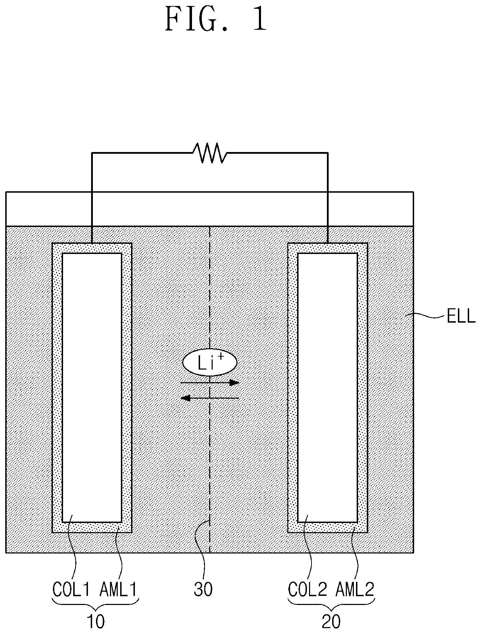

FIG. 1 illustrates a simplified conceptual diagram showing a rechargeable lithium battery, according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 towards one of the positive electrode 10 and the negative electrode 20.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material of about 90 wt% to about 99 wt%, a binder of about 0.5 wt% to about 5 wt%, and a conductive material of about 0 wt% to about 5 wt%.

The binder may be configured to improve attachment of negative electrode active material particles to each other and also to improve attachment of the negative electrode active material to the current collector COL2. The binder may include a non-aqueous binder, an aqueous binder, a dry binder, or a combination thereof.

The non-aqueous binder may include at least polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least styrene-butadiene rubber, (meth)acrylated styrene-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least polytetrafluoroethylene, polyvinylidene fluoride, polyvinylidene fluoride-hexafluoropropylene copolymer, polyethylene oxide, or a combination thereof.

The conductive material may be used to provide an electrode with conductivity, and any suitable conductive material that does not cause a chemical change in a battery may be used as the conductive material to constitute the battery. For example, the conductive material may include at least a carbon-based material such as natural graphite, artificial graphite, carbon black, acetylene black, Ketjenblack, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, at least crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least soft carbon, hard carbon, mesophase pitch carbon, or calcined coke.

The lithium metal alloy may include an alloy of lithium and metal such as at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least silicon, silicon-carbon composite, SiOₓ (where 0<x<2), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least Sn, SnO₂, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

### Separator 30

Based on the type of rechargeable lithium battery, the separator 30 may be present between the positive electrode 10 and the negative electrode 20. The separator 30 may include at least one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, the coating layer including an organic material, an inorganic material, or a combination thereof.

The porous substrate may be or include a polymer layer including at least one of a polyolefin such as polyethylene and polypropylene, a polyester such as at least polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle such as at least Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer, or may be present as a stack of a coating layer including the organic material and a coating layer including an inorganic material.

### Electrolyte ELL

The electrolyte ELL for the rechargeable lithium battery may include a non-aqueous organic solvent and a lithium salt.

The non-aqueous organic solvent may be configured as a medium for transmitting ions that participate in an electrochemical reaction of a battery.

The non-aqueous organic solvent may include at least a carbonate-based solvent, an ester-based solvent, an ether-based solvent, a ketone-based solvent, an alcohol-based solvent, an aprotic solvent, or a combination thereof.

The carbonate-based solvent may include at least dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least methyl acetate, ethyl acetate, n-propyl acetate, dimethyl acetate, methyl propionate, ethyl propionate, decanolide, mevalonolactone, valerolactone, or caprolactone.

The ether-based solvent may include at least dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The aprotic solvent may include nitriles such as R-CN (where R is a hydrocarbon group having a C2 to C20 linear, branched, or cyclic structure and may include a double bond, an aromatic ring, or an ether group); amides such as at least dimethylformamide; dioxolanes such as 1,3-dioxolane or 1.4-dioxolane; or sulfolanes.

The non-aqueous organic solvent may be used alone or in a mixture of two or more substances.

In addition, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be or include a material that is dissolved in the non-aqueous organic solvent to constitute a supply source of lithium ions in a battery and plays a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB)

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and may further include a binder and/or a conductive material.

For example, the positive electrode 10 may further include an additive that can constitute a sacrificial positive electrode.

The binder may be configured to improve the attachment of positive electrode active material particles to each other, and also to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be configured to provide an electrode with conductivity, and any suitable conductive material that does not cause chemical change of a battery may be used as the conductive material to constitute the battery. The conductive material may include, for example, at least a carbon-based material such as natural graphite, artificial graphite, carbon black, acetylene black, Ketjenblack, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

The positive electrode active material in the positive electrode active material layer AML1 may include a compound (e.g., lithiated intercalation compound) that can, or is configured to, reversibly intercalate and deintercalate lithium. For example, the positive electrode active material may include at least one kind of composite oxide including lithium and metal that includes at least cobalt, manganese, nickel, and a combination thereof.

The composite oxide may include lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{d}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the chemical formulae above, A is or includes Ni, Co, Mn, or a combination thereof, X is or includes Al, Ni, Co, Mn, Cr, Fe, Mg, Sr, V, a rare-earth element, or a combination thereof, D is or includes O, F, S, P, or a combination thereof, G is or includes Al, Cr, Mn, Fe, Mg, La, Ce, Sr, V, or a combination thereof, and L¹ is or includes Mn, Al, or a combination thereof.

For example, the positive electrode active material may be or include a high-nickel-based positive electrode active material having a nickel amount equal to or greater than about 80 mol%, equal to or greater than about 85 mol%, equal to or greater than about 90 mol%, equal to or greater than about 91 mol%, or equal to or greater than about 94 mol% and equal to or less than about 99 mol%, relative to 100 mol% of metal devoid of lithium in the lithium transition metal composite oxide. The high-nickel-based positive electrode active material may achieve high capacity and thus may be applied to a high-capacity and high-density rechargeable lithium battery.

In an example embodiment, a positive electrode of the present disclosure may include a positive electrode active material layer having a certain resistivity and ionic resistance to achieve high-rate discharge characteristics. A positive electrode of a rechargeable lithium battery suitable according to some example embodiment of the present disclosure will be described in detail, which is suitable for ultra high power wireless power supply that maintains for more than about 5 minutes.

### Low-Resistance Positive Electrode

The positive electrode active material layer AML1 of the positive electrode 10 according to some example embodiments of the present disclosure may have a low resistivity (ρ) and a low ionic resistance (Rᵢₒₙ), and thus the rechargeable lithium battery may exhibit improved high-rate discharge characteristics and improved, advantageous or desired stability.

As discussed with reference to FIG. 1, the positive electrode 10 may include a positive electrode current collector COL1 and a positive electrode active material layer AML1.

In an example embodiment, the positive electrode active material layer AML1 may have a resistivity (ρ) of equal to or less than about 5 Ωcm. For example, the resistivity (ρ) of the positive electrode active material layer AML1 may be equal to or less than about 4 Ωcm, equal to or less than about 3 Ωcm, or equal to or less than about 2 Ωcm. For example, the resistivity (ρ) of the positive electrode active material layer AML1 may range from about 0.1 Ωcm to about 5 Ωcm, from about 0.5 Ωcm to about 5 Ωcm, from about 0.5 Ωcm to about 3 Ωcm, from about 0.5 Ωcm to about 2 Ωcm, or from about 1 Ωcm to about 2 Ωcm.

In an example embodiment, the positive electrode active material layer AML1 may have an ionic resistance (Rᵢₒₙ) of equal to or less than about 6 Ωcm². For example, the ionic resistance (Rᵢₒₙ) of the positive electrode active material layer AML1 may range from about 0.1 Ωcm² to about 6 Ωcm², from about 1 Ωcm² to about 6 Ωcm², or from about 2 Ωcm² to about 5.5 Ωcm².

The positive electrode active material layer AML1 may include a positive electrode active material such as the positive electrode active material discussed above, a conductive material, and a binder.

In an example embodiment, the positive electrode active material layer AML1 may include carbon nano-tubes and nano-carbon as the conductive material.

In this description, the language "carbon nano-tube" may indicate a carbon allotrope having a cylindrical nano-structure.

In this description, the language "nano-carbon" may indicate a carbon allotrope having a spherical or oval nano-structure. In an example embodiment, the nano-carbon may be a nano-structured carbon allotrope which aspect ratio is in a range of about 1 to about 10. For example, the nano-carbon may be a fullerene.

In an example embodiment, the carbon nano-tubes may have an average length of about 40 µm to about 250 µm. For example, the average length of the carbon nano-tubes may range from about 70 µm to about 250 µm or from about 100 µm to about 250 µm. When the average length of the carbon nano-tubes is equal to or greater than about 40 µm, an active material layer including the carbon nano-tubes may reduce resistance of an electrode and to improve performance of a recharge battery fabricated by applying the same. When the average length of the carbon nano-tubes is equal to or less than about 250 µm, it may be possible to concurrently reduce resistance of an electrode and resistance of a rechargeable battery, as well as to improve high-rate charge and discharge performance. In addition, when the average length of the carbon nano-tubes satisfies the range above, it may be possible to improve high-rate charge and discharge performance of a rechargeable battery and to achieve a long lifetime of a rechargeable battery.

In an example embodiment, the carbon nano-tubes may have an average diameter of about 1 nm to about 20 nm. For example, the average diameter of the carbon nano-tubes may range from about 5 nm to about 20 nm or from about 15 nm to about 20 nm. When the average diameter of the carbon nano-tubes is equal to or greater than about 1 nm, it may be possible to improve dispersion in preparing a slurry including the carbon nano-tubes. When the average diameter of the carbon nano-tubes is equal to or less than about 20 nm, it may be possible to reduce resistance of an electrode.

In an example embodiment, the carbon nano-tubes may have a bulk density that is equal to or less than about 0.1 g/cm³. For example, the bulk density of the carbon nano-tubes may range from about 0.001 g/cm³ to about 0.1 g/cm³ or from about 0.01 g/cm³ to about 0.1 g/cm³. When the bulk density of the carbon nano-tubes satisfies any of the above ranges, it may be possible to improve, e.g., resistance characteristics, low-temperature characteristics, discharge characteristics, and high-temperature storage characteristics of a rechargeable lithium battery including the carbon nanotubes.

In an example embodiment, the carbon nano-tubes may have a Raman R value of about 0.8 to about 1.3. For example, the Raman R value of the carbon nano-tubes may range from about 0.9 to about 1.15. When the Raman R value of the carbon nano-tubes satisfies any of the above ranges, dispersion of the carbon nano-tubes may improve in an active material. It may thus be possible to achieve an active material layer having improved, advantageous or desired conductivity.

In this description, the Raman R value may refer to an intensity ratio (R=Id/Ig) obtained from a peak intensity (Ig) (G, about 1,580 cm⁻¹) and a peak intensity (Id) (D, about 1,350 cm⁻¹) in Raman spectrum analysis.

The carbon nano-tubes may be one, two, or more single-walled carbon nano-tubes, double-walled carbon nano-tubes, or multi-walled carbon nano-tubes. When the carbon nano-tubes are single-walled or double-walled carbon nano-tubes, it may be possible to improve dispersion in preparing slurry including the carbon nano-tubes, to achieve improved, advantageous or desired processability such as coating in forming an active material layer, and concurrently to obtain improved conductivity of an active material layer formed by using the carbon nanotubes.

In an example embodiment, the nano-carbon particles may have an average particle diameter (D₅₀) of about 5 nm to about 100 nm. For example, the average particle diameter of the nano-carbon particles may range from about 20 nm to about 50 nm. When the average particle diameter of the nano-carbon particles is greater than about 100 nm, there may be an increase in resistance of an electrode manufactured by applying an active material layer including the same. In addition, when the average particle diameter of the nano-carbon particles is less than about 5 nm, there may be a substantially insignificant improvement in conductivity. For example, when the average particle diameter of the nano-carbon particles satisfies any of the above ranges, it may be possible to increase conductivity of an active material layer formed including the nano-carbon particles, as well as to reduce resistance of an electrode.

In an example embodiment, the nano-carbon particles may have a specific surface area (SSA) of about 65 m²/g to about 1,000 m²/g. For example, the specific surface are of the nano-carbon particles may range from about 500 m²/g to about 800 m²/g. When the specific surface area of the nano-carbon satisfies any of the above ranges, it may be possible to reduce resistance of an electrode as well as to improve input/output characteristics and a lifetime of a battery cell. In an example embodiment, the specific surface area may be measured by a nitrogen adsorption method or a Brunauer Emmett Teller (BET) method.

A weight ratio of the carbon nano-tubes to the nano-carbon particles may range from about 1.5 to about 3.5. For example, the weight ratio may range from about 1.5 to about 3.5, from about 2.5 to about 3.5, or from about 3 to about 3.5. When the carbon nano-tubes and the nano-carbon particles are mixed in the range above, it may be possible to minimize mixture resistance and to maintain high-temperature stability while significantly or substantially improving high-rate charge and discharge characteristics of a rechargeable lithium battery fabricated by applying the above mixture.

Moreover, as a mixture of the carbon nano-tubes and the nano-carbon particles is included as a conductive material, it may be possible to minimize an amount of the conductive material in the positive electrode active material layer AML1. For example, the conductive material may have an amount equal to or less than about 3.0 wt%, for example about 0.5 wt% to about 3.0 wt%, relative to the total weight of the positive electrode active material layer AML1. Within any of the above ranges, tortuosity may be secured to improve both the electrical conductivity and the ionic resistance. Thus, a rechargeable lithium battery may improve high-rate charge and discharge characteristics thereof.

The minimization or reduction in the amount of the conductive material may induce a minimization or reduction in the amount of the binder. For example, the binder may be included in an amount equal to or less than about 1.5 wt%, for example about 0.5 wt% to about 1.5 wt%, relative to the total weight of the positive electrode material layer AML1. Within any of the above ranges, an appropriate or desired adhesive force may be provided, and concurrently an energy density may be improved. Therefore, a rechargeable lithium battery may improve a high-rate discharge capacity thereof.

In an example embodiment, the positive electrode active material layer AML1 may include a positive electrode active material in a concentration of about 95.5 wt% to about 99 wt%, a binder in a concentration of about 0.5 wt% to about 1.5 wt%, and a conductive material in a concentration of about 0.5 wt% to about 3.0 wt%.

In an example embodiment, the positive electrode active material may include, e.g., lithium nickel cobalt aluminum oxide (NCA) and lithium manganese oxide (LMO).

For example, lithium nickel cobalt aluminum oxide (NCA) may include a compound expressed by Chemical Formula 1 below.

[Chemical Formula 1] Liₐ₁Ni_{b1}Co_{c1}Al_{d1}G1ₑ₁O₂

In Chemical Formula 1, a1, b1, c1, d1, and e1 may satisfy 0.90≤a1≤1.8, 0≤b1≤0.9, 0≤c1≤0.5, 0≤d1≤0.5, and 0≤e1≤0.1. G1 may include Cr, Mn, Fe, Mg, La, Ce, Sr, V, or a combination thereof.

For example, lithium manganese oxide (LMO) may include a compound expressed by Chemical Formula 2 below.

[Chemical Formula 2] Liₐ₂Mn₂G2_{b2}O₄

In Chemical Formula 2, a2 and b2 may satisfy 0.90≤a1≤1.8 and 0.001≤b1≤0.1. G2 may include Al, Cr, Fe, Mg, La, Ce, Sr, V, or a combination thereof.

In an example embodiment, a weight ratio of lithium manganese oxide (LMO) to lithium nickel cobalt aluminum oxide (NCA) may range from about 4 to about 9. As lithium nickel cobalt aluminum oxide (NCA) and lithium manganese oxide (LMO) are mixed in the range above, and both the discharge capacity and the high-temperature stability may be improved.

In this description, the term "mixture density" may be obtained by dividing weight by volume of components (an active material, a conductive material, a binder, and so forth) of an electrode excluding a current collector from the electrode. In an example embodiment, the mixture density of a positive electrode (or density of a positive electrode active layer) may range from about 2.3 g/cc to about 2.67 g/cc. As the mixture density has the range above, it may be possible to achieve low mixture ionic resistance and resistivity, and accordingly to improve high-rate charge and discharge characteristics.

In this description, the expression "loading amount of a positive electrode active material" may refer to a weight of a positive electrode active material per unit area of an active material layer. In an example embodiment, the loading amount of a positive electrode active material of the positive electrode active material layer may range from about 25 mg/cm² to about 29 mg/cm². As the rechargeable lithium battery has the above loading amount range for the positive electrode active material of the positive electrode active material layer, the rechargeable lithium battery may have a discharge capacity that is equal to or greater than about 60 Ah under 8.7C high-rate discharge environment.

### Rechargeable Lithium Battery

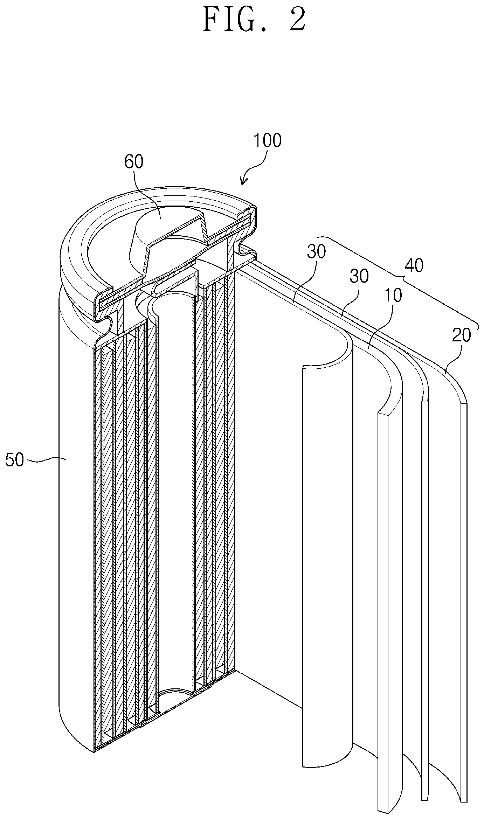

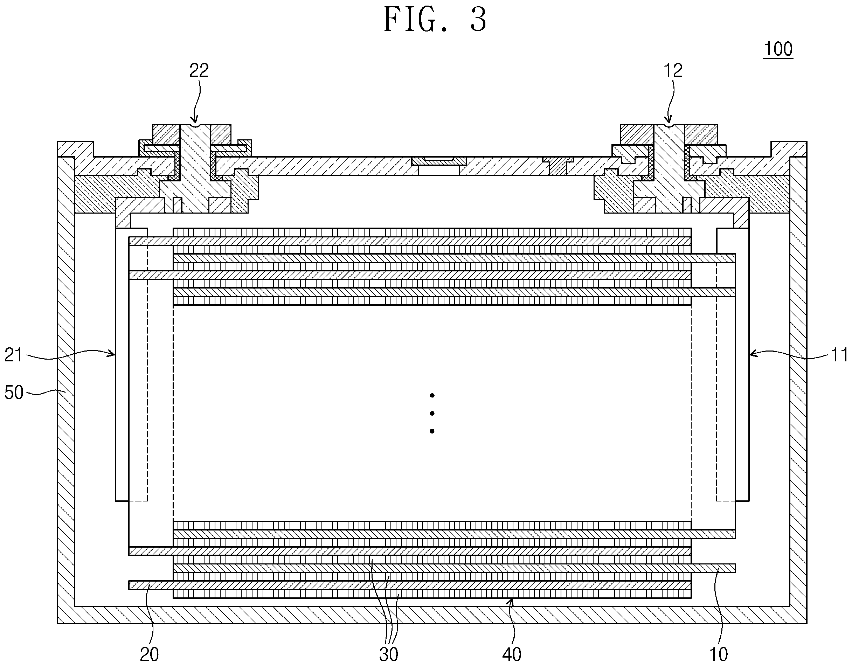

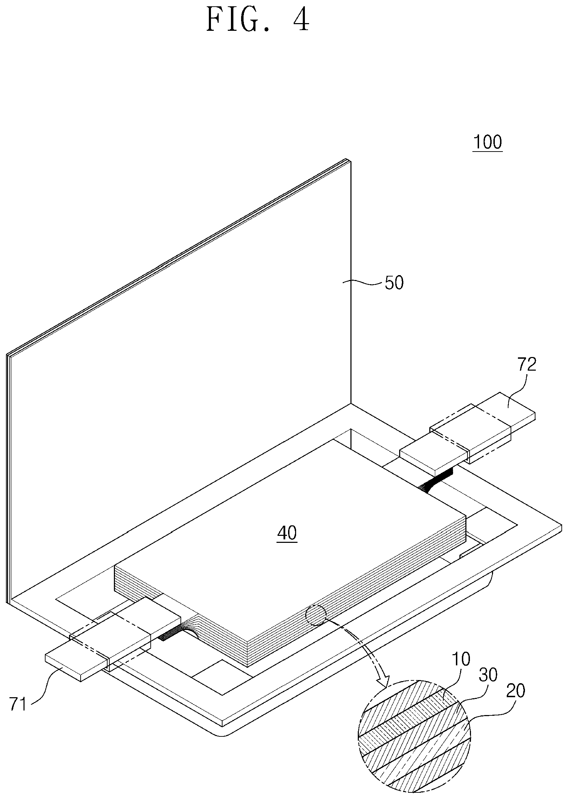

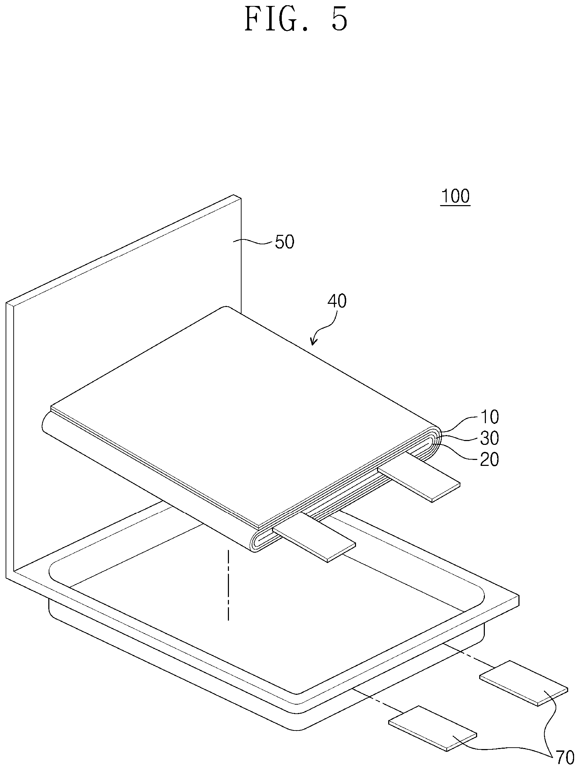

Based on the shape of a rechargeable lithium battery, the rechargeable lithium battery may be classified into a plurality of shape types such as, e.g., cylindrical, prismatic, pouch, and coin types. FIGS. 2 to 5 illustrate simplified diagrams showing a rechargeable lithium battery according to an example embodiment, FIG. 2 shows a cylindrical battery, FIG. 3 shows a prismatic battery, and FIGS. 4 and 5 show pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50, as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 as illustrated in FIG. 5, or a positive electrode tab 71 and a negative electrode tab 72 as illustrated in FIG. 4, and the electrode tab 70 and the tabs 71 and 72 are configured as electrical paths for externally inducing a current generated in the electrode assembly 40.

As the positive electrode 10 mentioned above is included in the rechargeable lithium battery according to example embodiments of the present disclosure, high-rate discharge characteristics may be improved, advantageous or desired. For example, a discharge capacity of about 63 Ah or higher may be achieved during discharge at an 8.7C discharge rate. In addition, a high-rate discharge efficiency expressed by Mathematical Equation 1 may be equal to or greater than about 90%. High-rate discharge efficiency [%] = [8.7C discharge capacity / 0.2C discharge capacity] × 100

In addition, the rechargeable lithium battery according to example embodiments of the present disclosure may maintain a maximum temperature of equal to or less than about 60°C during discharge at an 8.7C discharge rate.

Thus, the rechargeable lithium battery may be applicable to an uninterruptible power supply (UPS) that requires high power for about 5 minutes or more.

### Uninterruptible Power Supply (UPS)

An uninterruptible power supply according to example embodiments of the present disclosure may include the rechargeable lithium battery discussed above. The rechargeable lithium battery may be included to sustain high power for about 5 minutes or more.

In an example embodiment, the uninterruptible power supply may include a plurality of rechargeable lithium batteries discussed above.

In an example embodiment, the uninterruptible power supply may include a rectifier configured to convert an externally provided alternating current (AC) into a direct current (DC). Thus, power may be supplied to an internal battery charge circuit and an UPS internal circuit.

In an example embodiment, the uninterruptible power supply may include a control unit configured to monitor and control an operating state thereof.

In an example embodiment, the uninterruptible power supply may include an output transformer configured to apply an appropriate voltage to a power supply target.

In the uninterruptible power supply according to example embodiments of the present disclosure, the rechargeable lithium battery may be included to sustain high power for at least about 5 minutes.

The following will describe Example Embodiments and Comparative Examples of the present disclosure. The following Example Embodiments, however, are merely examples, and the present disclosure is not limited to the Example Embodiments discussed below.

### Example Embodiment 1

### (1) Manufacture of Positive Electrode

### Positive Electrode Active Material

LiNi_{0.91}Co_{0.07}Al_{0.02}O₂ (NCA) and LiMn₂O₄ (LMO) were mixed in a weight ratio of 1:9 to prepare a positive electrode active material.

### Conductive Material

Carbon nano-tubes having an average length of 55±5 µm, a Raman R value of 0.98, and a bulk density of 0.0506 g/cm³ was prepared. Nano-carbon particles having an average particle diameter (D₅₀) of 32 nm and a specific surface area of 630 m²/g was prepared. The carbon nano-tubes and the nano-carbon particles were mixed in a weight ratio of 7:3 to prepare a conductive material.

### Positive Electrode

97.5 wt% of the positive electrode active material, 1 wt% of the conductive material containing the carbon nano-tubes and the nano-carbon particles mixed with each other, and 1.5 wt% of polyvinylidene fluoride, were mixed to prepare a positive electrode active material slurry. The positive electrode active slurry was coated on an aluminum film to achieve an active material loading amount of 27 mg/cm², and subsequently dried and roll-pressed to manufacture a positive electrode having a mixture density of 2.4 g/cc.

### (2) Manufacture of Negative Electrode

Graphite, styrene-butadiene, and carboxymethyl cellulose (CMC) in a weight ratio of 98:1:1 were added to a water solvent to prepare a negative electrode slurry.

The negative electrode slurry was coated on a copper foil, and subsequently dried and roll-pressed to manufacture a negative electrode.

### (3) Fabrication of Rechargeable Lithium Battery

The positive electrode manufactured according to the preceding item (1), the negative electrode manufactured according to the preceding item (2), and an electrolyte were used to fabricate a rechargeable lithium battery. The electrolyte was prepared by dissolving 1.0M LiPF₆ in a solvent containing ethylene carbonate and diethyl carbonate mixed in a volume ratio of 50:50.

### Example Embodiment 2

A positive electrode and a rechargeable lithium battery were fabricated in a similar method as in Embodiment 1, with a difference that nano-carbon particles and carbon nano-tubes were mixed in a weight ratio of 1:1.5 to prepare a conductive material.

### Example Embodiment 3

A positive electrode and a rechargeable lithium battery were fabricated in a similar method as in Embodiment 1, with a difference that nano-carbon particles and carbon nano-tubes were mixed in a weight ratio of 1:2 to prepare a conductive material.

### Example Embodiment 4

A positive electrode and a rechargeable lithium battery were fabricated in a similar method as in Embodiment 1, with a difference that nano-carbon particles and carbon nano-tubes were mixed in a weight ratio of 1:2.5 to prepare a conductive material.

### Example Embodiment 5

A positive electrode and a rechargeable lithium battery were fabricated in a similar method as in Embodiment 1, with a difference that nano-carbon particles and carbon nano-tubes were mixed in a weight ratio of 1:3 to prepare a conductive material.

### Example Embodiment 6

A positive electrode and a rechargeable lithium battery were fabricated in a similar method as in Embodiment 1, with a difference that nano-carbon particles and carbon nano-tubes were mixed in a weight ratio of 1:3.5 to prepare a conductive material.

### Example Embodiment 7

A positive electrode and a rechargeable lithium battery were fabricated in a similar method as in Embodiment 1, with a difference that rolling strength was changed to manufacture a positive electrode having a mixture density (or density of a positive electrode active material layer) of 2.3 g/cc.

### Example Embodiment 8

A positive electrode and a rechargeable lithium battery were fabricated in a similar method as in Embodiment 1, with a difference that rolling strength was changed to manufacture a positive electrode having a mixture density (or density of a positive electrode active material layer) of 2.67 g/cc.

### Example Embodiment 9

A positive electrode and a rechargeable lithium battery were fabricated in a similar method as in Embodiment 1, with a difference that the positive electrode active material slurry was coated on an aluminum film to achieve an active material loading amount of 25 mg/cm² per unit area.

### Example Embodiment 10

A positive electrode and a rechargeable lithium battery were fabricated in a similar method as in Embodiment 1, with a difference that the positive electrode active material slurry was coated on an aluminum film to achieve an active material loading amount of 29 mg/cm² per unit area.

### Comparative Example 1

A positive electrode and a rechargeable lithium battery were fabricated in a similar method as in Embodiment 1, with a difference of the use of a conductive material containing carbon nano-tubes without nano-carbon particles.

### Comparative Example 2

A positive electrode and a rechargeable lithium battery were fabricated in a similar method as in Embodiment 1, with a difference that nano-carbon particles and carbon nano-tubes were mixed in a weight ratio of 1:1 to prepare a conductive material.

### Comparative Example 3

A positive electrode and a rechargeable lithium battery were fabricated in a similar method as in Embodiment 1, with a difference that nano-carbon particles and carbon nano-tubes were mixed in a weight ratio of 1:4 to prepare a conductive material.

### Comparative Example 4

A positive electrode and a rechargeable lithium battery were fabricated in a similar method as in Embodiment 1, with a difference that rolling strength was changed to manufacture a positive electrode having a mixture density (or density of a positive electrode active material layer) of 2.2 g/cc.

### Comparative Example 5

A positive electrode and a rechargeable lithium battery were fabricated in a similar method as in Embodiment 1, with a difference that rolling strength was changed to manufacture a positive electrode having a mixture density (or density of a positive electrode active material layer) of 2.7 g/cc.

### Comparative Example 6

A positive electrode and a rechargeable lithium battery were fabricated in a similar method as in Embodiment 1, with a difference that the positive electrode active material slurry was coated on an aluminum film to achieve an active material loading amount of 24 mg/cm² per unit area.

### Comparative Example 7

A positive electrode and a rechargeable lithium battery were fabricated in a similar method as in Embodiment 1, with a difference that the positive electrode active material slurry was coated on an aluminum film to achieve an active material loading amount of 30 mg/cm² per unit area.

### Comparative Example 8

A positive electrode and a rechargeable lithium battery were fabricated in a similar method as in Embodiment 1, with a difference that 94 wt% of the positive electrode active material, 4 wt% of the conductive material containing carbon nano-tubes and nano-carbon particles mixed with each other, and 2 wt% of polyvinylidene fluoride were mixed to prepare a positive electrode active material slurry when the positive electrode was manufactured.

### Comparative Example 9

A positive electrode and a rechargeable lithium battery were fabricated in a similar method as in Embodiment 1, with a difference that 99.5 wt% of the positive electrode active material, 0.25 wt% of the conductive material containing carbon nano-tubes and nano-carbon particles mixed with each other, and 0.25 wt% of polyvinylidene fluoride were mixed to prepare a positive electrode active material slurry when the positive electrode was manufactured.

Table 1 below list physical properties (mixture density, resistivity, and ionic resistance) of the positive electrodes manufactured according to Example Embodiments 1 to 10 and Comparative Examples 1 to 9.

The resistivity was measured as follows. The positive electrode was cut into a certain size (32ϕ). A resistivity value of the cut positive electrode was measured by Hioki resistance tester. In addition, an ionic resistance (Rᵢₒₙ) of the positive electrode was measured by using electrochemical impedance spectroscopy (EIS) and Nyquist plot.

**[Table 1]**

| | Weight ratio of carbon nano-tubes to nano-carbon | Mixture density (g/cc) | Active material loading amount (mg/cm²) | Resistivity (Ωcm) | Ionic resistance (Ωcm²) |
|---|---|---|---|---|---|
| Embodiment 1 | 2.33 | 2.4 | 27 | 1.9 | 4.2 |
| Embodiment 2 | 1.5 | 2.4 | 27 | 4.5 | 4.6 |
| Embodiment 3 | 2 | 2.4 | 27 | 4 | 4.2 |
| Embodiment 4 | 2.5 | 2.4 | 27 | 1.8 | 4.3 |
| Embodiment 5 | 3 | 2.4 | 27 | 1.3 | 4.2 |
| Embodiment 6 | 3.5 | 2.4 | 27 | 1.0 | 4.7 |
| Embodiment 7 | 2.33 | 2.3 | 27 | 1.9 | 4.1 |
| Embodiment 8 | 2.33 | 2.67 | 27 | 1.9 | 5.3 |
| Embodiment 9 | 2.33 | 2.4 | 25 | 1.9 | 4.1 |
| Embodiment 10 | 2.33 | 2.4 | 29 | 1.9 | 4.3 |
| Comparative Example 1 | - | 2.4 | 27 | 100 | - |
| Comparative Example 2 | 1 | 2.4 | 27 | 8 | 8.9 |
| Comparative Example 3 | 4 | 2.4 | 27 | 1.1 | 7 |
| Comparative Example 4 | 2.33 | 2.2 | 27 | 7.1 | 5.3 |
| Comparative Example 5 | 2.33 | 2.7 | 27 | 6.2 | 7.1 |
| Comparative Example 6 | 2.33 | 2.4 | 24 | 5.7 | 6.7 |
| Comparative Example 7 | 2.33 | 2.4 | 30 | 8.9 | 6.5 |
| Comparative Example 8 | 2.33 | 2.4 | 27 | 7.9 | 6.3 |
| Comparative Example 9 | 2.33 | 2.4 | 27 | 8.3 | 6.2 |

Referring to Table 1, it may be ascertained that the negative electrode of Comparative Example 1 in which only carbon nano-tubes are used as the conductive material has significantly high resistivity and ionic resistance. Referring to Comparative Example 2, it may be ascertained that, when the weight ratio of carbon nano-tubes to nano-carbon particles is less than 1.5, the resistivity and the ionic resistance are significantly increased. Referring to Comparative Example 3, it may be ascertained that, when the weight ratio of carbon nano-tubes to nano-carbon particles is greater than 3.5, the resistivity is reduced, while the ionic resistance is significantly increased. In addition, it may be ascertained that, even when the active material loading amount is deviated from a range of 25 mg/cm² to 29 mg/cm², or even when the mixture density is deviated from a range of 2.3 g/cc to 2.67 g/cc, the resistivity and the ionic resistance are abruptly increased (see Comparative Examples 4 to 7). Moreover, it may be ascertained that, even when an amount of the conductive material is less than 0.5 wt% or greater than 3 wt%, a resistivity (5 Ωcm or less) and an ionic resistance (6 Ωcm² or less) are difficult to achieve.

### Evaluation Example 1: High-rate Discharge Characteristics

An uninterruptible power supply was used to evaluate discharge capacity, discharge efficiency, and maximum temperature during high-rate discharge.

The rechargeable lithium batteries fabricated according to Example Embodiments 1, 3, and 4 and Comparative Examples 1 to 7 were charged and discharged once at 0.2C to measure charge-discharge capacities, and were subsequently charged and discharged at 8.7C to measure discharge capacities. Table 2 below list 8,7C discharge capacities with respect to 0.2C discharge capacities. A high-rate discharge efficiency may be defined by Mathematical Equation 1 below. High-rate discharge efficiency [%] = [8.7C discharge capacity / 0.2C discharge capacity] × 100

Table 2 also shows a maximum temperature (Tₘₐₓ) during 8.7C discharge.

**[Table 2]**

| | 0.2C discharge capacity (Ah) | 8.7C discharge capacity (Ah) | High-rate discharge efficiency (%) | Tₘₐₓ (°C) |
|---|---|---|---|---|
| Embodiment 1 | 65.9 | 64 | 97 | 36.8 |
| Embodiment 3 | 65 | 64 | 98 | 49 |
| Embodiment 4 | 65 | 64 | 98.5 | 47.5 |
| Comparative Example 1 | 60 | 54.5 | 90 | 65.4 |
| Comparative Example 2 | 65 | 57 | 87 | 66 |
| Comparative Example 3 | 63 | 60 | 95 | 65 |
| Comparative Example 4 | 64 | 59 | 89 | 63 |
| Comparative Example 5 | 65 | 60 | 92 | 60 |
| Comparative Example 6 | 64 | 54 | 84 | 62 |
| Comparative Example 7 | 63 | 57 | 90 | 66 |

Referring to Table 2, it may be ascertained that the negative electrode of Comparative Example 1 in which only carbon nano-tubes are used as the conductive material has a high-rate discharge efficiency of 90% or less and a maximum temperature of 65°C or higher during high-rate discharge. In addition, it may be ascertained that the negative electrode of Comparative Example in which the weight ratio of carbon nano-tubes to nano-carbon particles is less than 1.5 has a high-rate discharge efficiency of 90% or less. It may be ascertained that the positive electrode of Comparative Example 3 in which the weight ratio of carbon nano-tubes to nano-carbon particles is greater than 3.5 has relatively proper high-rate discharge efficiency, while the maximum temperature at high-rate discharge is excessively high to reduce stability.

In contrast, it may be ascertained that the positive electrodes of Example Embodiments 1, 3, and 4 in each of which the weight ratio of carbon nano-tubes to nano-carbon particles is between 1.5 and 3.5 have improved, advantageous or desired discharge capacity and high-rate discharge efficiency and also have improved stability due to their discharge maximum temperature of 50°C or less.

Moreover, referring to Comparative Example 4, it may be ascertained that the high-rate discharge efficiency is reduced to 90% or less when the mixture density is excessively small such as 2.2 g/cc. Referring to Comparative Example 5, it may be ascertained that the high-rate discharge efficiency is relatively good such as 90% or higher, while the maximum temperature during the high-rate discharge is excessively high to reduce stability.

Furthermore, referring to Comparative Examples 6 and 7, it may be ascertained that, when the active material loading amount is relatively large or small, the 8.7C discharge capacity is reduced to 60 Ah or less and the high-rate discharge efficiency is also significantly reduced.

A positive electrode according to example embodiments of the present disclosure may include a positive electrode active material layer with a resistivity that is 5 Ωcm or less and with an ionic resistance that is 6 Ωcm² or less, and thus improved, advantageous or desired high-rate charge and discharge characteristics may be achieved.

A rechargeable lithium battery according to example embodiments of the present disclosure may include the positive electrode discussed above, and may thus have discharge capacity of 60 Ah or higher and discharge efficiency of 90% or higher under 8.7C high-rate discharge environment.

In addition, a rechargeable lithium battery according to example embodiments of the present disclosure may include the positive electrode mentioned above, and thus a maximum temperature may be maintained below about 60°C under 8.7C high-rate discharge environment.

## Claims

1. A positive electrode (10), comprising:
a positive electrode current collector (COL1); and
a positive electrode active material layer (AML1) on the positive electrode current collector (COL1),
wherein the positive electrode active material layer (AML1) includes:
a positive electrode active material in a concentration of about 95.5 wt% to about 99 wt%;
a binder in a concentration of about 0.5 wt% to about 1.5 wt%; and
a conductive material in a concentration of about 0.5 wt% to about 3 wt%,
wherein the conductive material includes nano-carbon particles and carbon nano-tubes, and
wherein a weight ratio of the carbon nano-tubes to the nano-carbon particles is in a range of about 1.5 to about 3.5.

2. The positive electrode (10) of claim 1, wherein a resistivity of the positive electrode active material layer (AML1) is equal to or less than about 5 Ωcm.

3. The positive electrode (10) of Claim 1 or 2, wherein an ionic resistance of the positive electrode active material layer (AML1) is equal to or less than about 6 Ωcm².

4. The positive electrode (10) of any of the claims 1 to 3, wherein a density of the positive electrode active material layer (AML1) is in a range of about 2.3 g/cc to about 2.67 g/cc.

5. The positive electrode (10) of any of the claims 1 to 4, wherein an active material loading amount of the positive electrode active material layer (AML1) is in a range of about 25 mg/cm² to about 29 mg/cm².

6. The positive electrode (10) of any of the claims 1 to 5, wherein an average length of the carbon nano-tubes is in a range of about 40 µm to about 250 µm.

7. The positive electrode (10) of any of the claims 1 to 6, wherein an average diameter of the carbon nano-tubes is in a range of about 1 nm to about 20 nm.

8. The positive electrode (10) of any of the claims 1 to 7, wherein an average particle diameter of the nano-carbon particles is in a range of about 5 nm to about 100 nm.

9. A rechargeable lithium battery, comprising:
a positive electrode (10) that includes a positive electrode current collector (COL1) and a positive electrode active material layer (AML1) on the positive electrode current collector (COL1);
a negative electrode (20); and
a separator (30) between the positive electrode (10) and the negative electrode (20),
wherein the positive electrode active material layer (AML1) includes:
a positive electrode active material in a concentration of about 95.5 wt% to about 99 wt%;
a binder in a concentration of about 0.5 wt% to about 1.5 wt%; and
a conductive material in a concentration of about 0.5 wt% to about 3 wt%,
wherein the conductive material includes nano-carbon particles and carbon nano-tubes, and
wherein a weight ratio of the carbon nano-tubes to the nano-carbon particles is in a range of about 1.5 to about 3.5.

10. The rechargeable lithium battery (100) of claim 9, wherein
a resistivity of the positive electrode active material layer (AML1) is equal to or less than about 5 Ωcm, and
an ionic resistance of the positive electrode active material layer (AML1) is equal to or less than about 6 Ωcm².

11. The rechargeable lithium battery (100) of claim 9 or 10, wherein, during discharge thereof at an 8.7C discharge rate, a maximum temperature is equal to or less than about 60°C.

12. The rechargeable lithium battery (100) of any of the claims 9 to 11, wherein, during discharge thereof at an 8.7C discharge rate, a high-rate discharge efficiency expressed by Mathematical Equation 1 is equal to or greater than about 90%, High-rate discharge efficiency [%] = [8.7C discharge capacity / 0.2C discharge capacity] × 100.

13. The rechargeable lithium battery (100) of any of the claims 9 to 12, wherein the positive electrode active material comprises at least one of lithium nickel cobalt aluminum oxide (NCA) and lithium manganese oxide (LMO).

14. The rechargeable lithium battery (100) of any of the claims 9 to 13, wherein an active material loading amount of the positive electrode active material layer (AML1) is in a range of about 25 mg/cm² to about 29 mg/cm².

15. The rechargeable lithium battery (100) of any of the claims 9 to 14, wherein a mixture density of the positive electrode is in a range of about 2.3 g/cc to about 2.67 g/cc.
